Europäisches Patentamt

European Patent Office

Office européen des brevets

(19)

(11) Numéro de publication : **0 368 689 B1**

(12) **FASCICULE DE BREVET EUROPEEN**

(45) Date de publication du fascicule du brevet :
**03.07.91 Bulletin 91/27**

(51) Int. Cl.⁵ : **B60B 7/08,** B60B 7/00

(21) Numéro de dépôt : **89402688.9**

(22) Date de dépôt : **29.09.89**

(54) **Enjoliveur de roue perfectionné.**

(30) Priorité : **24.10.88 FR 8813895**

(43) Date de publication de la demande :
**16.05.90 Bulletin 90/20**

(45) Mention de la délivrance du brevet :
**03.07.91 Bulletin 91/27**

(84) Etats contractants désignés :
**AT BE CH DE ES GB GR IT LI LU NL SE**

(56) Documents cités :
**EP-A- 0 109 939**
**EP-A- 0 271 381**
**DE-A- 1 805 835**
**US-A- 3 172 533**

(73) Titulaire : **RAPID S.A.**
**251 Boulevard Péreire**
**F-75852 Paris Cédex 17 (FR)**

(72) Inventeur : **Dubost, Dominique**
**53 Résidence Elysées II**
**F-78170 La Celle Saint Cloud (FR)**

(74) Mandataire : **Durand, Yves Armand Louis et al**
**CABINET WEINSTEIN 20, Avenue de**
**Friedland**
**F-75008 Paris (FR)**

EP 0 368 689 B1

## Description

La présente invention a essentiellement pour objet un enjoliveur de roue perfectionné.

On connaît déjà, d'après le document FR-A-2 606 710 un enjoliveur de roue susceptible d'être fixé de manière amovible dans un redan de la jante de roue d'un véhicule par l'intermédiaire d'une couronne élastiquement déformable clippée dans ledit redan et interrompue pour former deux extrémités libres réunies par un moyen élastiquement déformable, tel que par exemple un fil métallique, permettant la déformation radiale de la couronne et son clippage aisé dans le redan de la jante de roue.

Toutefois, il a été constaté que la déformation radiale permanente de la couronne sous l'effet du fil métallique formant en quelque sorte un ressort, altérait à la longue les qualités de la couronne et de l'enjoliveur qui lui est associé, de sorte que la solidité du montage amovible de l'enjoliveur sur la roue par l'intermédiaire de la couronne était loin d'être totalement satisfaisante.

Aussi, la présente invention a pour but de remédier à cet inconvénient en proposant un enjoliveur de roue qui peut être monté d'une manière sûre et fiable sur une jante de roue tout en conservant ses qualités d'amovibilité.

A cet effet, l'invention a pour objet un enjoliveur de roue susceptible d'être fixé de manière amovible dans un redan de la jante de roue d'un véhicule par l'intermédiaire d'une couronne élastiquement déformable clippée dans ledit redan et interrompue pour former au moins deux extrémités libres réunies par au moins un moyen élastiquement déformable, tel que par exemple un fil métallique, permettant la déformation radiale de ladite couronne, caractérisé par une barrette montée de manière amovible entre lesdites deux extrémités libres et exerçant une pré-contrainte sur la couronne à l'encontre de la force exercée par ledit moyen élastiquement déformable.

On évite ainsi la déformation de l'ensemble enjoliveur-couronne avant montage sur la jante de roue, étant entendu que le montage de cet ensemble par clippage sur la jante de roue est réalisé après démontage de la ou des barrettes.

Suivant une autre caractéristique de l'invention, la barrette précitée comporte deux pattes verticales, réalisées par exemple par des découpages dans la barrette, et coopérant avec des trous respectivement prévus dans les deux extrémités libres précitées.

On précisera encore que la barrette comporte deux bords tombés lui conférant une section transversale en forme de U permettant notamment l'encastrement de la couronne dans la barrette.

Avantageusement, la couronne est interrompue à deux niveaux suivant sensiblement son diamètre et peut par conséquent être munie de deux barrettes.

Mais d'autres avantages et caractéristiques de l'invention apparaîtront mieux dans la description détaillée qui suit et se réfère aux dessins annexés donnés uniquement à titre d'exemple, et dans lesquels :

La figure 1 est une vue partielle et en perspective, barrette enlevée, d'un enjoliveur de roue selon cette invention ; et

La figure 2 est une vue en plan et de dessous de cet enjoliveur.

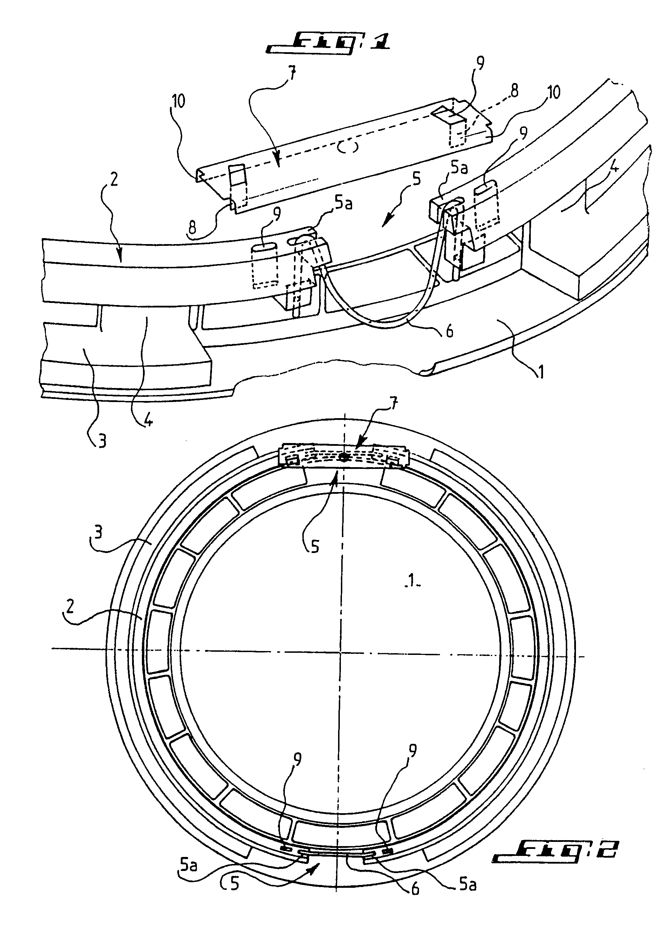

En se reportant aux figures 1 et 2, on voit un enjoliveur de roue qui se compose essentiellement d'un flasque extérieur et décoratif 1, dont est solidaire une couronne 2 permettant la fixation par clippage du flasque 1 dans le redan (non représenté) d'une jante de roue (également non représentée).

La couronne 2 peut être fixée sur le flasque 1 de toute manière appropriée.

Elle sera de préférence intégrale au flasque 1 et obtenue par moulage avec celui-ci.

Elle peut aussi constituer un élément indépendant qui est fixé par collage ou rivetage sur le flasque 1 ou qui est fixé sur ce flasque de manière amovible par l'intermédiaire d'agrafes quelconques, par exemple.

La couronne 2 comporte de préférence une embase 3 solidaire du flasque 1 et reliée à la couronne par des pattes ou analogues 4 susceptibles de conférer à ladite couronne une élasticité radiale.

La couronne 2 comporte une ou plusieurs parties interrompues telles que 5. Suivant l'exemple de réalisation représenté sur la figure 2, la couronne 2 est interrompue à deux niveaux suivant sensiblement son diamètre, comme on le voit bien.

Les deux extrémités libres 5a formant l'interruption 5 sont reliées par un fil métallique 6 formant ressort accroché sur lesdites extrémités libres par tout moyen approprié, tel que par exemple un simple orifice.

Conformément à l'invention, les extrémités libres 5a en vis-à-vis sont reliées ou pontées par une barrette 7 montée de manière amovible entre lesdites extrémités, et cela de façon à exercer une pré-contrainte sur la couronne 2 à l'encontre de la force exercée par le fil-ressort 6 tendant à éloigner l'une de l'autre les extrémités libres 5a de la couronne 2.

Suivant un exemple de réalisation, la barrette 7 comporte deux pattes verticales 8 réalisées par exemple par des découpages ou crevés 9 dans ladite barrette.

Ces pattes verticales 8 peuvent coopérer avec des trous 9 respectivement ménagés dans les deux extrémités libres en vis-à-vis 5a de la couronne 2.

La barrette 7, comme on le voit bien sur la figure 1, comporte deux bords tombés opposés 10 lui conférant une section transversale en forme de U améliorant la rigidité de ladite barrette tout en permettant l'encastrement de la couronne 2 dans celle-ci.

Mais, pour une meilleure compréhension de l'invention, on décrira ci-après comment s'effectue la mise en oeuvre de l'enjoliveur.

Après fabrication, et avant montage sur la jante de roue, l'enjoliveur est muni de ses barrettes 7. C'est dire que les pattes verticales 8 sont enfichées dans les orifices 9 de la couronne 2, ce qui tend à rapprocher les extrémités 5a de ladite couronne l'une de l'autre pour réaliser ainsi une sorte de pré-contrainte sur la couronne. Ainsi, on a constaté qu'avant montage de l'ensemble flasque-enjoliveur 1 et couronne 2 sur la jante de roue, on évite avantageusement la déformation de cet ensemble sous l'effet du fil-ressort 6, laquelle déformation est de nature à altérer les qualités esthétiques et de clippage de la couronne 2.

Pour effectuer le montage de l'enjoliveur sur la jante de roue, on démonte les barrettes diamétralement opposées 7, ce qui libère la couronne et provoque une légère déformation radiale de celle-ci.

Dès lors, l'enjoliveur pourra être monté de manière sûre et fiable sur la jante de roue par l'intermédiaire de la couronne 2 qui possèdera toutes les qualités d'élasticité radiale requises.

Bien entendu, l'invention n'est nullement limitée au mode de réalisation décrit et illustré qui n'a été donné qu'à titre d'exemple.

C'est ainsi que le nombre d'interruptions de la couronne et donc de barrettes de pré-contrainte peut être quelconque. De même, la couronne 2 peut être solidaire du flasque extérieur 1 formant enjoliveur par tout moyen approprié.

## Revendications

1. Enjoliveur de roue susceptible d'être fixé de manière amovible dans un redan de la jante de roue d'un véhicule par l'intermédiaire d'une couronne (2) élastiquement déformable clippée dans ledit redan et interrompue (5) pour former au moins deux extrémités libres (5a) réunies par au moins un moyen élastiquement déformable, tel que par exemple un fil métallique (6), permettant la déformation radiale de ladite couronne, caractérisé par une barrette (7) montée de manière amovible entre lesdites deux extrémités libres (5a) et exerçant une pré-contrainte sur la couronne (2) à l'encontre de la force exercée par le moyen élastiquement déformable pour ainsi éviter la déformation de l'ensemble enjoliveur-couronne avant montage sur la jante de roue et également permettre le montage de cet ensemble par clippage sur la jante après démontage de la barrette (7).

2. Enjoliveur selon la revendication 1, caractérisé en ce que la barrette (7) comporte deux pattes verticales (8), réalisées par exemple par des découpages dans la barrette, et coopérant avec des trous (9) respectivement prévus dans les deux extrémités libres précitées (5a).

3. Enjoliveur selon la revendication 1 ou 2, caractérisé en ce que la barrette précitée (7) comporte deux bords tombés (10) lui conférant une section transversale en forme de U permettant l'encastrement de la couronne (2) dans la barrette.

4. Enjoliveur selon l'une des revendications 1 à 3, caractérisé en ce que la couronne (2) est interrompue à deux niveaux suivant sensiblement son diamètre et peut par conséquent être munie de deux barrettes (7).

## Ansprüche

1. Radzierkappe, die fähig ist, in abnehmbarer Weise in einem Absatz der Radfelge eines Fahrzeugs befestigt zu werden, über einen elastisch verformbaren, in dem besagten Absatz eingeklemmten Ring (2), der unterbrochen (5) ist, um wenigstens zwei durch wenigstens ein die radiale Verformung des besagten Ringes gestattendes, elastisch verformbares Mittel wie zum Beispiel einen Draht (6) verbundene, freie Enden (5a) zu bilden, gekennzeichnet durch eine zwischen den besagten beiden freien Enden (5a) in lösbarer Weise angeordnete Leiste (7), die eine Vorspannung auf den Ring (2) entgegen der durch das elastisch verformbare Mittel ausgeübten Kraft ausübt, um somit die Verformung der Zierkappe-Ringgesamtheit vor dem Einbau an der Radfelge zu vermeiden und auch den Einbau dieser Gesamtheit durch Einklemmen an der Felge nach dem Abnehmen der Leiste (7) zu gestatten.

2. Zierkappe nach Anspruch 1 dadurch gekennzeichnet, dass die Leiste (7) zwei in der Leiste zum Beispiel durch Ausschneiden hergestellte und mit jeweils in den beiden vorgenannten freien Enden (5a) vorgesehenen Löchern (9) zusammenwirkende senkrechte Ansätze (8) aufweist.

3. Zierkappe nach Anspruch 1 oder 2, dadurch gekennzeichnet, dass die vorgenannte Leiste (7) zwei ihr einen U-förmigen Querschnitt verleihende, das Einfassen des Ringes (2) in die Leiste gestattende, abwärts umgebogene Ränder (10) aufweist.

4. Zierkappe nach einem der Ansprüche 1 bis 3, dadurch gekennzeichnet, dass der Ring (2) in zwei Bereichen etwa entlang seines Durchmessers unterbrochen ist und demzufolge mit zwei Leisten (7) versehen sein kann.

## Claims

1. Ornamental wheel hub cap susceptible of being removably fastened into a stepped portion of the wheel rim of a vehicle through the medium of an elastically deformable ring (2) clipped into the said stepped portion and interrupted (5) to form at least two free ends (5a) joined together by at least one elastically deformable means such for instance as a wire (6) permitting the radial deformation of the said ring, characterized by a strap (7) mounted in a removable manner between the said two free ends (5a) and exerting a prestress upon the ring (2) against the force exerted by the elastically deformable means to thus avoid the deformation of the ornamental hub cap – ring assembly before mounting onto the wheel rim and to also allow the mounting of this assembly through clipping onto the rim after removal of the strap (7).

2. Ornamental hub cap according to claim 1, characterized in that the strap (7) comprises two vertical lugs (8) provided for instance by cut-outs in the strap and co-operaring with holes (9) provided in both aforesaid free ends (5a), respectively.

3. Ornamental hub cap according to claim 1 or 2, characterized in that the aforesaid strap (7) comprises two turned-down edges (10) conferring upon it a U-shaped cross-section permitting the setting of the ring (2) into the strap.

4. Ornamental hub cap according to one of claims 1 to 3, characterized in that the ring (2) is interrupted at two levels substantially along its diameter and may therefore be provided with two straps (7).

Fig. 1

Fig. 2